**Europäisches Patentamt**

(19) **European Patent Office**

**Office européen des brevets**

(11) Veröffentlichungsnummer: **0 209 766**
**B1**

(12) # EUROPÄISCHE PATENTSCHRIFT

(45) Veröffentlichungstag der Patentschrift:
06.03.89

(51) Int. Cl.⁴: **C 25 D 17/28**, B 65 G 49/04

(21) Anmeldenummer: 86109082.7

(22) Anmeldetag: 03.07.86

(54) Einrichtung zur elektrolytischen Oberflächenbehandlung von schüttfähigem Gut.

(30) Priorität: 09.07.85 DE 3524510

(43) Veröffentlichungstag der Anmeldung:
28.01.87 Patentblatt 87/5

(45) Bekanntmachung des Hinweises auf die Patenterteilung:
06.03.89 Patentblatt 89/10

(84) Benannte Vertragsstaaten:
AT BE CH DE FR GB IT LI NL SE

(56) Entgegenhaltungen:
FR-A-1 201 213

(73) Patentinhaber: **Siemens Aktiengesellschaft Berlin und München, Wittelsbacherplatz 2, D-8000 München 2 (DE)**

(72) Erfinder: **Birkle, Siegfried, Dr., Veit- Stoss- Strasse 46, D-8552 Höchstadt/Aisch (DE)**
Erfinder: **Gehring, Johann, Hohe Warte 2, D-8521 Spardorf (DE)**

## Beschreibung

Die Erfindung betrifft eine Einrichtung zur elektrolytischen Oberflächenbehandlung von schüttfähigem Gut, mit
- einer Wanne zur Aufnahme eines Behandlungsbades,
- mindestens einer in dem Behandlungsbad angeordneten Elektrode mit der entgegengesetzten Polarität des anodisch oder kathodisch kontaktierten Gutes und mit
- mindestens einem Schwingförderer mit wendelförmig nach oben führender Förderbahn für den Transport des Gutes durch das Behandlungsbad.

Aus aprotischen, sauerstoff- und wasserfreien, aluminiumorganischen Elektrolyten abgeschiedenes Aluminium zeichnet sich durch seine Duktilität, Porenarmut, Korrosionsfestigkeit und Eloxierfähigkeit aus. Da der Zutritt von Luft durch Reaktion mit Luftsauerstoff und Luftfeuchtigkeit eine erhebliche Verringerung der Leitfähigkeit und der Lebensdauer dieser Elektrolyten bewirkt, muß das Galvanisieren in einer unter Luftabschluß arbeitenden Behandlungseinrichtung vorgenommen werden. Damit auch beim Be- und Entladen dieser unter Luftabschluß arbeitenden Behandlungseinrichtungen der Zutritt von Luft verhindert werden kann, sind außerdem Ein- und Ausfuhrschleusen erforderlich, die als Gasschleusen, als Flüssigkeitsschleusen oder als kombinierte Gas-Flüssigkeits-Schleusen ausgebildet und mit Fördermitteln zum Durchschleusen des zu behandelnden Gutes ausgerüstet sind.

Aus der EP-PS-0 070 011 ist eine Einrichtung für das elektrolytische Abscheiden von Metall bekannt, bei welcher schuttfähiges Galvanisiergut über eine mit Fördermitteln versehene Eingangsstation in eine drehbar in der Galvanisierwanne angeordnete Galvanisiertrommel eingebracht und nach dem Durchlaufen der auf ihrer Innenwandung mit einer Förderschnecke versehenen Galvanisiertrommel über eine ebenfalls mit Fördermitteln versehene Ausgangsstation wieder ausgetragen wird. Die mit einer Perforation versehene Galvanisiertrommel ist dabei als Kathode geschaltet, während die Anode im Innern der Galvanisiertrommel angeordnet ist. Für das galvanische Abscheiden von Aluminium aus sauerstoff- und wasserfreien aluminiumorganischen Elektrolyten wird die Galvanisierwanne gasdicht abschließbar ausgeführt und der oberhalb des Elektrolytspiegels liegende Raum mit einem Inertgas beaufschlagt, während die Eingangsstation und die Ausgangsstation zusätzlich mit Flüssigkeitsschleusen ausgerüstet werden.

Beim Massengalvanisieren muß das schüttfähige Galvanisiergut während der galvanischen Bearbeitung so zusammengehalten werden, daß jedes Einzelteil elektrischen Kontakt hat. Das Galvanisiergut soll andererseits so weit ausgebreitet werden wie möglich, damit die Metallabscheidung auf einer großen Warenoberfläche erfolgen kann und eine möglichst gleichmäßige Stromdichte auf allen Teilen gewährleistet ist. Eine weitere wesentliche Voraussetzung für die Erzielung einwandfreier Metallüberzüge mit einer gleichmäßigen Schichtdicke ist die ausreichende Durchmischung des Galvanisiergutes während der galvanischen Bearbeitung. In sogenannten Einhänge-Galvanisiergeräten wird dies durch die Übertragung einer oszillierenden Drehbewegung auf das mit dem Galvanisiergut gefüllte und in den Elektrolyten eingetauchte Warengefäß erreicht (Zeitschrift "Galvanotechnik" 75, 1984, Nr. 11, Seite 1399). Durch die Schwingbewegungen des Warengefäßes wird gleichzeitig auch noch der Elektrolytaustausch verbessert. Bei Einrichtungen mit Galvanisiertrommel genügt zur Warenbewegung und durch Mischung des Galvanisiergutes das Drehen der Trommel, durch welches je nach Form und Wandreibung die einzelnen Teile mehr oder weniger weit nach oben gefördert werden und dann wieder nach unten abrollen oder abgleiten. Einrichtungen für das Massengalvanisieren sollten ferner mit Fördermitteln für den Transport des Galvanisiergutes durch den Elektrolyten ausgerüstet sein, durch welche in Verbindung mit entsprechenden Ein- und Ausgangsstationen eine kontinuierliche oder auch intervallmäßige Eindosierung und Entnahme des Galvanisiergutes ermöglicht wird. Schließlich sollten sowohl die Warenbewegung und Durchmischung als auch der Transport des Galvanisiergutes durch den Elektrolyten so vorgenommen werden, daß eine schonende Behandlung des Galvanisiergutes gewährleistet ist und auch empfindliche Teile während der galvanischen Bearbeitung nicht mechanisch geschädigt werden.

Eine aus der US-A-3 649 490 bekannte Einrichtung zur elektrolytischen Oberflächenbehandlung von schüttfähigem Gut erfüllt die vorstehend aufgeführten Forderungen weitgehend. Für den Transport des Galvanisiergutes durch den Elektrolyten ist bei dieser bekannten Einrichtung ein Schwingförderer mit wendelförmig nach oben geführter Förderbahn vorgesehen, während als Elektrode ein den Schwingförderer umgebender Zylinder oder senkrecht in das Behandlungsbad eingehängte Stäbe dienen. Bei einer aus der FR-A-1 201 213 bekannten Einrichtung sind ebenfalls ein Schwingförderer mit wendelförmiger Förderbahn und ein senkrecht in das Behandlungsbad eintauchender Stab als Elektrode vorgesehen. Gemäß einer Variante kann die stabförmige Elektrode auch derart abgebogen sein, daß ihr freies Ende parallel zum Querschnitt der Förderbahn an dieser Stelle verläuft. Obwohl sich in beiden Fällen durch die auf das schüttfähige Gut übertragenen Schwingungen eine gleichmäßige Ausbreitung des Gutes auf der Förderbahn ergibt, kann bei der elektrolytischen Oberflächenbehandlung keine gleichmäßige Stromdichte auf allen Teilen erzielt werden.

Die im Zusammenhang mit dem Massengalvanisieren aufgeführten Probleme treten auch in gleicher oder zumindest in analoger Weise bei anderen Prozessen zur elektrolytischen Oberflächenbehandlung von schüttfähigem Gut auf, wobei als Beispiele für derartige Prozesse das elektrolytische Beizen in Säuren oder Laugen, das elektrolytische Entfetten in alkalischen Bädern oder das elektrolytische Polieren genannt werden können. Das schüttfähige Gut wird dabei je nach Art der elektrolytischen Oberflächenbehandlung entweder als Kathode oder als Anode geschaltet, wobei die Schaltung als Anode beispielsweise beim elektrolytischen Polieren angewandt wird.

Der Erfindung liegt die Aufgabe zugrunde, eine Einrichtung der eingangs genannten Art so zu verbessern, daß bei der elektrolytischen Oberflächenbehandlung eine zumindest weitgehend gleichmäßige Stromdichte auf allen Teilen gewährleistet ist.

Diese Aufgabe wird bei einer gatttungsgemäßen Einrichtung dadurch gelöst, daß die Elektrode wendelförmig ausgebildet ist und mit Abstand parallel der Förderbahn des Schwingförderers folgt.

Der Erfindung liegt die Erkenntnis zugrunde, daß gerade im Hinblick auf die gleichmäßige Ausbreitung des schüttfähigen Gutes auf der wendelförmigen Förderbahn die Elektrode ebenfalls wendelförmig ausgebildet und mit Abstand parallel zur Förderbahn angeordnet werden muß. Hierdurch ergibt sich eine Optimierung des Stromdurchgangs zwischen der im Behandlungsraum angeordneten Elektrode und dem schüttfähigen Gut. Neben der Erzielung einer ausreichend großen Elektrodenfläche wird durch die erfindungsgemäße Anordnung der Elektrode insbesondere eine hohe und äußerst gleichmäßige Stromdichte auf sämtlichen Teilen des zu behandelnden Gutes ermöglicht.

Gemäß einer bevorzugten Ausgestaltung der Erfindung ist das Gut über die Förderbahn des Schwingförderers elektrisch kontaktierbar. Gegenüber einer Kontaktierung durch eine Vielzahl von Knopfkontakten oder anderen Kontaktelementen bietet die unmittelbare Kontaktierung durch die aus einem elektrisch leitenden Werkstoff bestehende Förderbahn bei vielen Elektrolyten den Vorteil einer gleichmäßigen Stromaufnahme über die gesamte effektive Oberfläche des ausgebreiteten Gutes.

Ist die Förderbahn des Schwingförderers mit einer Perforation versehen, so kann der Stromdurchgang zu dem zu behandelnden Gut auch von unten her erfolgen. In diesem Fall ist dann sogar eine weitere Verbesserung des Stromgangs ermöglicht, wenn unterhalb der Förderbahn eine mit Abstand parallel zur Förderbahn ausgerichtete Zusatz-Elektrode im Behandlungsbad angeordnet ist.

Die Förderbahn des Schwingförderers kann auch - in Förderrichtung gesehen - mindestens eine nach unten führende Stufe aufweisen. Derartige Stufen wirken dann als Stolperstufen, die bei schonender Behandlung des Gutes zu einer weiteren Steigerung der Durchmischung führen.

Je nach Art des zu behandelnden Gutes kann es unter Umständen auch vorteilhaft sein, wenn in der Wanne mit Hilfe einer Umwälzpumpe eine in Förderrichtung auf das Gut einwirkende Badströmung erzeugbar ist. Neben einer weiteren Verbesserung des Elektrolytaustausches wird hierdurch einer Dämpfung der Förderung durch den Elektrolyten entgegengewirkt und eine Unterstützung der Förderung durch die Elektrolytströmung erzielt.

Eine erfindungsgemäße Einrichtung kann mit relativ geringem zusätzlichen Aufwand unter Luftabschluß betrieben werden und beispielsweise für das galvanische Abscheiden von Aluminium aus sauerstoff- und wasserfreien, aluminiumorganischen Elektrolyten eingesetzt werden. In diesem Fall ist die Wanne gasdicht verschließbar, während der Raum oberhalb des Behandlungsbades mit einem Inertgas beaufschlagbar ist. Neben den auch in wäßrigen Behandlungsbädern erzielbaren Vorteilen hat der Einsatz eines Schwingförderers als Fördermittel hier insbesondere den zusätzlichen Vorteil, daß keine aus dem Behandlungsbad herausgeführten Antriebswellen abgedichtet werden müssen. Eine derartige Abdichtung rotierender Teile, die beispielsweise bei der Verwendung von Transportbändern und anderen bekannten Fördermitteln erforderlich ist, ist bei den beispielsweise bei aprotischen Badflüssigkeiten gestellten hohen Anforderungen durchaus als problematisch anzusehen. In einer unter Luftabschluß arbeitenden Einrichtung wird außerdem durch die Vibrationen des Schwingförderers ein Einschleppen von Gasen oder Dämpfen über das schüttfähige Gut mit Sicherheit ausgeschlossen.

Ausführungsbeispiele der Erfindung sind in der Zeichnung dargestellt und werden im folgenden näher beschrieben.

Es zeigen in stark vereinfachter schematischer Darstellung

Fig. 1  eine erste Ausführungsform einer mit einer wendelförmigen Schwingrinne ausgerüsteten Einrichtung zum galvanischen Abscheiden von Aluminium,

Fig. 2  eine zweite Ausführungsform einer mit einer wendelförmigen Schwingrinne ausgerüsteten Einrichtung zum galvanischen Abscheiden von Aluminium und

Fig. 3  die Anordnung einer Anode und einer Zusatz-Anode zu beiden Seiten einer perforierten Förderbahn.

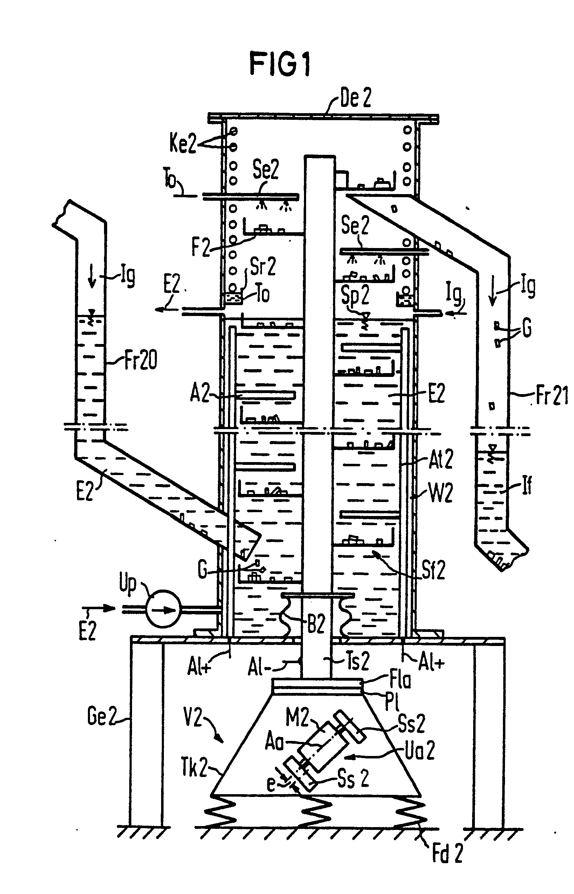

Fig. 1 zeigt eine erste Ausführungsform einer turmförmigen Einrichtung zum galvanischen Abscheiden von Aluminium. In einer auf einem Gestell Ge2 angeordneten und mit Hilfe eines oberen Deckels De2 gasdicht verschlossenen kreiszylindrischen Wanne W2 befindet sich ein aprotischer, sauerstoff- und wasserfreier, aluminiumorganischer Elektrolyt E2. Der oberhalb des Spiegels Sp2 des Elektrolyten E2 liegende Bereich der Wanne W2 wird mit einem Inertgas, wie zum z. B. Stickstoff, beaufschlagt, wobei die Zufuhr dieses Inertgases durch einen Pfeil Ig aufgezeigt ist.

Das zu aluminierende Gut G, bei welchem es sich beispielsweise um Bolzen, Muttern, Schrauben, Abstandsbuchsen und dergl. handelt wird über eine (in der Zeichnung nicht dargestellte) Einfuhrschleuse und ein Fallrohr Fr20 von oben her in den unteren Bereich der Wanne W2 eingebracht, wobei das Fallrohr Fr20 bis zur Höhe des Spiegels Sp2 mit dem Elektrolyten E2 gefüllt und darüber mit Inertgas Ig beaufschlagt ist. Das über das Fallrohr Fr20 eingebrachte Gut G fällt dann auf das untere Ende der Förderbahn F2 eines innerhalb der Wanne W2 angeordneten und insgesamt mit Sf2 bezeichneten Schwingförderers. Auf der als Schwingrinne ausgebildeten und wendelförmig nach oben führenden Förderbahn F2 wird das Gut G über den Spiegel Sp2 des Elektrolyten E2 hinaus nach oben transportiert und fällt dann in das trichterförmig ausgebildete obere Ende eines aus der Wanne W2 hinausführenden Fallrohres Fr21, welches den abwärtsführenden Schenkel einer sonst nicht näher dargestellten und als U-förmige Flüssigkeitsschleuse ausgebildeten Ausfuhrschleuse bildet. Der untere Bereich des mit dem Inertgas Ig beaufschlagten Fallrohres Fr21 ist daher mit einer Inertflüssigkeit If, wie z. B. Toluol, gefüllt.

Die innerhalb der Wanne W2 wendelförmig nach oben führende und als Schwingrinne ausgebildete Förderbahn F2 ist an einer zentrisch angeordneten Tragsäule Ts2 befestigt, deren unteres Ende auf einem zentrisch innerhalb des Gestelles Ge2 angeordneten Vibrator V2 befestigt ist. Der Durchtritt der Tragsäule Ts2 durch den Boden der Wanne W2 ist durch einen elastischen Balg B2 abgedichtet, welcher einerseits mit einer auf die Tragsäule Ts2 aufgesetzten Scheibe und andererseits mit dem Boden der Wanne W2 verbunden ist. Durch den Vibrator V2 wird die Förderbahn F2 über die Tragsäule Ts2 zu Schwingungen mit einer etwa Schraubenförmigen Bewegung angeregt. Aufgrund der schiefen Bewegung und der dabei auftretenden Beschleunigungen und Geschwindigkeiten wird dem auf der wendelförmig nach oben führenden Förderbahn F2 liegenden Gut G ein schiefer Wurf aufgezwungen, so daß das schüttfähige Gut G unter Gewinn an Höhe in Förderrichtung transportiert wird. Da die Wurfweite und Wurfhöhe äußerst gering sind, handelt es sich bei dieser Art der Förderung um eine Mikrowurfförderung, welche eine äußerst schonende Behandlung des zu aluminierenden Gutes G gewährleisten. Im dargestellten Beispiel ist die Tragsäule Ts2 über einen Flansch Fla und eine elektrisch isolierende Platte Pl mit einem sich nach unten hin konisch erweiternden Tragkörper Tk2 des Vibrators V2 fest verbunden. Der Tragkörper Tk2 ist über mehrere Federn Fd2 schwingungsfähig auf dem Fundament gelagert. Innerhalb des konischen Tragkörpers Tk2 ist ein Unwuchtantrieb Ua2 angeordnet, dessen Motor M2 zwei zu beiden Seiten angeordnete Schwungscheiben Ss2 mit einstellbarer Exzentrizität e antreibt. Die Antriebsachse Aa des Motors M2 ist dabei um einen Winkel von beispielsweise 45° zur Horizontalen geneigt, so daß die Unwucht der Schwungscheibe Ss2 die bereits erwähnten Schwingungen mit einer etwa schraubenförmigen Bewegung erzeugt.

Das schüttfähige Gut G wird über die Förderbahn F2 kathodisch kontaktiert, wobei die Förderbahn F2 über die Tragsäule Ts2 und eine Anschlußleitung A1- mit dem Minuspol einer äußeren Spannungsquelle verbunden ist. Um eine unerwünschte Aluminium-Mitabscheidung zu verhindern, sind die nicht mit dem Gut G in Berührung kommenden Bereiche der Förderbahn F2 und die Tragsäule Ts2 mit einer Emailleschicht überzogen. Im Bereich des Förderweges des Gutes G durch den Elektrolyten E2 ist mit Abstand parallel zur Förderbahn F2 eine wendelförmige Anode A2 aus Reinaluminium angeordnet, die an über den Umfang verteilt angeordneten und vertikal ausgerichteten stabförmigen Anodenträgern At2 befestigt ist und über die Anodenträger At2 sowie elektrisch isoliert aus der Wanne W2 geführte Anschlußleitungen A1+ mit dem Pluspol der äußeren Spannungsquelle verbunden ist. Die Breite der Anode A2 entspricht ungefähr der Breite der Förderbahn F2, so daß sich auch hier eine im Verhältnis zur Warenoberfläche sehr große Anodenoberfläche ergibt und für den Durchgang des Galvanisierstromes optimale Bedingungen vorliegen. Der Elektrolytaustausch wird durch die Schwingungen der gegebenenfalls perforierten Förderbahn F2 intensiviert. Zur weiteren Verbesserung des Elektrolytaustausches kann im Bereich des Spiegels Sp2 der Elektrolyt E2 abgezogen und über eine Umwälzpumpe Up im Bodenbereich der Wanne W2 wieder eingeleitet werden, wobei diese Elektrolytumwälzung die Förderung des Gutes G unterstützt.

Oberhalb des Spiegels Sp2 des Elektrolyten E2 ist eine Sprüheinrichtung Se2 angeordnet, welche im Bereich der obersten Gänge der Förderbahn F2 ein mit dem Elektrolyten E2 verträgliches Lösungsmittel auf das fertig aluminierte Gut G sprüht und damit das Gut G von noch anhaftenden Elektrolytresten befreit. Bei diesem Lösungsmittel handelt es sich um das in dem Elektrolyten E2 enthaltene Toluol To, welches an einer oberhalb des Spiegels Sp2 in der Wanne W2 angeordneten Kondensationseinrichtung Ke2 kondensiert, in einer Sammelrinne Sr2 aufgefangen und über eine (in der Zeichnung nicht dargestellte) Umwälzpumpe der Sprüheinrichtung Se2 zugeführt wird.

Die in Fig. 1 dargestellte Einrichtung wird im Durchlauf mit kontinuierlicher Beschickung und Entnahme des Gutes G betrieben, wobei die Fördergeschwindigkeit und die Länge der Förderbahn F2 derart gewählt werden, daß die Aluminiumabscheidung in Höhe des Spiegels Sp2 die gewünschte Schichtdicke erreicht hat.

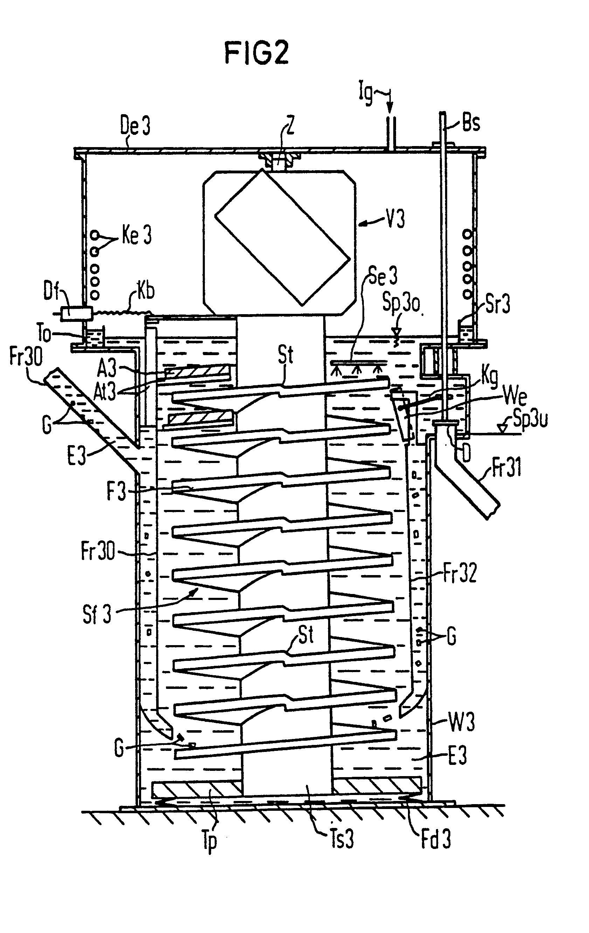

Fig. 2 zeigt eine zweite Ausführungsform einer turmförmigen Einrichtung zum galvanischen Abscheiden von Aluminium. In einer unmittelbar auf dem Flur angeordneten und mit Hilfe eines Deckels De3 gasdicht verschlossenen kreiszylindrischen Wanne W3 befindet sich ein aprotischer, sauerstoff- und wasserfreier, aluminiumorganischer Elektrolyt E3. Der oberhalb des Spiegels Sp30 des Elektrolyten E3 liegende Bereich der Wanne W3 wird mit einem Inertgas, wie z. B. Stickstoff, beaufschlagt, wobei die Zufuhr dieses Inertgases durch einen Pfeil Ig aufgezeigt ist.

Das zu aluminierende Gut G wird über eine (in der Zeichnung nicht dargestellte) Einfuhrschleuse und ein Fallrohr Fr30 in die Wanne W3 eingebracht und fällt dann auf das untere Ende der Förderbahn F3 eines innerhalb der Wanne W3 angeordneten und insgesamt mit Sf3 bezeichneten Schwingförderers. Auf der als Schwingrinne ausgebildeten und wendelförmig nach oben führenden Förderbahn F3 wird das Gut G durch den Elektrolyten E3 nach oben transportiert und fällt dann auf eine als kurze Rinne ausgebildete Weiche We. Auf dem Weg nach oben passiert das Gut G mehrere nach unten führende Stufen St der Förderbahn F3, deren Stufenhöhe so bemessen ist, daß sich das Gut G beim Fallen dreht und eine verbesserte Durchmischung des Gutes G erzielt wird. Bei der in Fig. 2 dargestellten Stellung der Weiche We gelangt das Gut G in ein als Rückführeinrichtung dienendes Fallrohr Fr32, welches das Gut G wieder zum untersten Gang der Förderbahn F3 zurückführt. Bei der dargestellten Stellung der Weiche We wird das Gut G also im Umlauf durch den Elektrolyten E3 gefördert. Vor einer Umstellung der Weiche We wird der Spiegel Sp3o des Elektrolyten E3 auf ein unteres Niveau Sp3u abgesenkt, welches unterhalb der oberen Öffnung eines zum Austrag des Gutes G nach außen geführten Fallrohres Fr31 liegt. Die Absenkung des Elektrolytspiegels, die in der Zeichnung nicht dargestellt ist, kann beispielsweise über eine Umwälzpumpe und ein mit Inertgas beaufschlagtes Speichergefäß vorgenommen werden. Um bei angehobenem Spiegel Sp3o ein Ausfließen des Elektrolyten E3 durch das austragsseitige Fallrohr Fr31 zu verhindern, ist dessen obere Öffnung durch einen Deckel D verschließbar, wobei das Öffnen und Schließen dieses Deckels D über eine nach außen geführte Betätigungsstange Bs pneumatisch oder hydraulisch vorgenommen werden kann. Die Weiche We ist dabei über ein Koppelglied Kg derart an die Betätigungsstange Bs angelenkt, daß mit dem Öffnungshub des Deckels D eine Umstellung erfolgt und das Gut G dann in das Fallrohr Fr31 fällt und in eine (in der Zeichnung nicht dargestellte) Ausfuhrschleuse gelangt.

Die wendelförmige Förderbahn F3 ist an einer zentrisch angeordneten Tragsäule Ts3 befestigt, deren unteres Ende über eine Tragplatte Tp und mehrere Federn Fd3 schwingungsfähig auf dem Boden der Wanne W3 gelagert ist und deren oberes Ende in dem oberhalb des gehobenen Spiegels Sp3o liegenden Bereich eines Vibrator V3 trägt. Der im Hinblick auf seine Funktion nicht näher dargestellte Vibrator V3 ist dabei über einen Zapfen Z im Deckel De3 drehbar und auch im geringen Umfang heb- und senkbar zentriert.

Das schüttfähige Gut G wird über die Förderbahn F3 kathodisch kontaktiert, wobei die Förderbahn F3 über die Tragsäule Ts3 und nicht dargestellte Anschlußmittel mit dem Minuspol einer äußeren Stromquelle verbunden ist. Eine mit Abstand parallel zur Förderbahn F3 angeordnete wendelförmige Anode A3 ist zur Vereinfachung der zeichnorischen Darstellung lediglich im Bereich der oberen Gänge angedeutet. Die Befestigung der Anode A3, die auch aus mehreren wendelförmigen Segmenten zusammengesetzt sein kann, erfolgt über einen in der Zeichnung ebenfalls nur angedeuteten Anodenträger At3, der über ein Kabel Kb und eine gasdichte und elektrisch isolierende Durchführung Df mit dem Pluspol der äußeren Spannungsquelle verbunden ist.

Oberhalb des abgesenkten Spiegels Sp3u des Elektrolyten E3 ist eine (in der Zeichnung nur angedeutete) Sprüheinrichtung Se3 angeordnet, welche das an einer Kondensationseinrichtung Ke3 kondensierte und in einer Sammelrinne Sr3 aufgefangene Toluol To in der Austragsphase auf das Gut G sprüht und die noch anhaftenden Elektrolytreste abspült.

Die in Fig. 2 dargestellte Einrichtung wird chargenweise mit dem Gut G beschickt und so lange im Umlauf betrieben, bis die Aluminiumabscheidung die gewünschte Schichtdicke erreicht hat. Danach wird der Elektrolyt E3 auf den unteren Spiegel Sp3u abgesenkt, die Weiche We bei gleichzweitiger Öffnung des Deckels D umgestellt und das fertig aluminierte und mit Hilfe der Sprüheinrichtung Se3 gereinigte Gut G ausgetragen. Durch den Umlaufbetrieb können dabei wesentlich geringere Bauhöhen als bei der Einrichtung nach Fig. 1 realisiert werden.

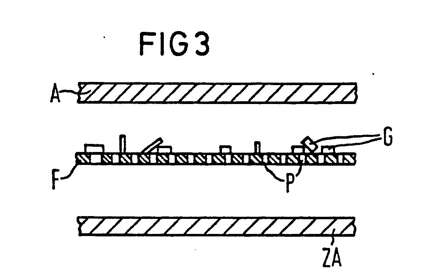

Fig. 3 zeigt eine mit einer Perforation P versehene Förderbahn F zur Förderung des schüttfähigen Gutes G durch einen Elektrolyten. Oberhalb der Förderbahn F ist eine mit Abstand parallel dazu ausgerichtete Anode A aus Reinaluminium angeordnet. Unterhalb der Förderbahn F ist eine mit Abstand parallel dazu ausgerichtete Zusatz-Anode ZA aus Reinaluminium angeordnet, welche durch die Performation P hindurch einen zusätzlichen Stromdurchgang zum Gut G bewirkt. Eine in die Förderbahn F eingebrachte Perforation P hat neben der weiteren Verbesserung des Stromdurchganges zusätzlich auch noch den Vorteil, daß sie den Elektrolytaustausch weiter verbessert und oberhalb des Bades die Trocknung des Gutes G begünstigt.

Die in Fig. 3 im Prinzip dargestellte Anordnung von Anode A und Zusatz-Anode ZA zu beiden Seiten der mit einer Perforation P versehenen Förderbahn F kann bei den Einrichtungen nach den Fig. 1 und 2 angewandt werden. Die Zusatz-Anode ZA ist dabei ebenso wie die Anode A selbstverständlich wendelförmig ausgebildet.

**Bezugszeichenliste für VPA 85 P 1426**

| | |
|---|---|
| A, A2, A3 | wendelförmige Anode |
| Aa | Antriebsachse |
| A1, A1+ | Anschlußleitung |
| At2, At3 | Anodenträger |
| B2 | Balg |
| Bs | Betätigungsstange |
| D | Deckel |
| De2, De3 | oberer Deckel |
| Df | Durchführung |
| E2, E3 | Elektrolyt |
| F, F2, F3 | Förderbahn |
| Fd2, Fd3 | Feder |
| Fr20, Fr21, Fr30, Fr31, Fr32 | Fallrohr |
| Fla | Flansch |
| G | schüttfähiges Gut |
| Ge2 | Gestell |
| If | Inertflüssigkeit |
| Ig | Inertgas |
| Kb | Kabel |
| Ke2, Ke3 | Kondensationseinrichtung |
| Kg | Koppelglied |
| M2 | Motor |
| P | Perforation |
| P1 | elektrisch isolierende Platte |
| Se2, Se3 | Sprüheinrichtung |
| Sf2, Sf3 | Schwingförderer |
| Sp2 | Spiegel |
| Sp3o | Spiegel, oberes Niveau |
| Sp3u | Spiegel, unteres Niveau |
| Sr2, Sr3 | Sammelrinne |
| Ss2 | Schwungscheibe |
| St | Stufe |
| Tk | Tragkörper |
| To | Toluol |
| Tp | Tragplatte |
| Ts2, Ts3 | Tragsäule |
| Ua2 | Unwunchtantrieb |
| Up | Umwälzpumpe |
| V2, V3 | Vibrator |
| W2, W3 | Wanne |
| We | Weiche |
| Z | Zapfen |
| ZA | Zusatz-Anode |
| e | Exzentrizität |

**Patentansprüche**

1. Einrichtung zur elektrolytischen Oberflächenbehandlung von schüttfähigem Gut, mit
- einer Wanne zur Aufnahme eines Behandlungsbades,
- mindestens einer in dem Behandlungsbad angeordneten Elektrode mit der entgegengesetzten Polarität des anodisch oder kathodisch kontaktierten Gutes und mit
- mindestens einem Schwingförderer mit wendelförmig nach oben geführter Förderbahn für den Transport des Gutes durch des Behandlungsbad,
dadurch gekennzeichnet,
daß die Elektrode (A) wendelförmig ausgebildet ist und mit Abstand parallel der Förderbahn (F) des Schwingförderers (Sf) folgt.

2. Einrichtung nach Anspruch 1,
dadurch gekennzeichnet,
daß das Gut (G) über die Förderbahn (F) des Schwingförderers (Sf) elektrisch kontaktierbar ist.

3. Einrichtung nach einem der vorhergehenden Ansprüche,
dadurch gekennzeichnet,
daß die Förderbahn (F) des Schwingförderers mit einer Perforation (P) versehen ist.

4. Einrichtung nach Anspruch 3,
dadurch gekennzeichnet,
daß unterhalb der Förderbahn (F) eine mit Abstand parallel zur Förderbahn (F) ausgerichtete Zusatz-Elektrode (ZA) im Behandlungsbad angeordnet ist.

5. Einrichtung nach einem der vorhergehenden Ansprüche,
dadurch gekennzeichnet,
daß die Förderbahn (F) des Schwingförderers (Sf) in Förderrichtung gesehen mindestens eine nach unten führende Stufe (St) aufweist.

6. Einrichtung nach einem der vorhergehenden Ansprüche,
dadurch gekennzeichnet,
daß in der Wanne (W) mit Hilfe einer Umwälzpumpe (Up) eine in Förderrichtung auf das Gut (G) einwirkende Badströmung erzeugbar ist.

7. Einrichtung nach einem der vorhergehenden Ansprüche,
dadurch gekennzeichnet,
daß die Wanne (W) gasdicht verschließbar ist und daß der Raum oberhalb des Behandlungsbades mit einem Inertgas (Ig) beaufschlagbar ist.

8. Verwendung einer Einrichtung nach einem der Ansprüche 1 bis 7 zum galvanischen Abscheiden von Aluminium aus aprotischen, sauerstoff- und wasserfreien, aluminiumorganischen Elektrolyten.

## Claims

1. Apparatus for the electrolytic surface treatment of bulk goods, with
   - a trough for taking up a treatment bath,
   - at least one electrode arranged in the treatment bath and having a polarity opposite to that of the goods which are contacted anodically or cathodically, and with
   - at least one vibratory conveyor with a conveyor track extending helically upwards for transporting the goods through the treatment bath,
   characterized in that the electrode (A) is of helical shape and follows, parallel and at a distance, the conveying track (F) of the vibratory conveyor (Sf).

2. Apparatus according to claim 1, characterized in that the goods (G) are electrically contactable via the conveyor track (F) of the vibratory conveyor (Sf).

3. Apparatus according to one of the preceding claims, characterized in that the conveyor track (F) of the vibratory conveyor is provided with a perforation (P).

4. Apparatus according to claim 3, characterized in that, underneath the conveyor track (F), an additional electrode (ZA) aligned parallel to and at a distance from the conveyor track (F) is arranged in the treatment bath.

5. Apparatus according to one of the preceding claims, characterized in that the conveyor track (F) of the vibratory conveyor (Sf) has, as viewed in the conveying direction, at least one step (St) leading downwards.

6. Apparatus according to one of the preceding claims, characterized in that a bath flow acting in the conveying direction on the goods (G) can be generated in the trough (4) by means of a circulation pump (Up).

7. Apparatus according to one of the preceding claims, characterized in that the trough (W) can be sealed gastight and that the space above the treatment bath can be blanketed with an inert gas (Ig).

8. Use of an apparatus according to one of claims 1 to 7 for the electro-deposition of aluminium from aprotic, oxygen-free and anhydrous, aluminium-organic electrolytes.

## Revendications

1. Installation de traitement électrolytique superficiel d'un produit en vrac, comprenant
   - une cuve de réception d'un bain de traitement,
   - au moins une électrode disposée dans le bain de traitement et ayant la polarité opposée au produit qui est monté en anode ou en cathode; et
   - au moins un convoyeur oscillant, à voie de transport hélicoïdale menant vers le haut, qui est destiné au transport du produit dans le bain de traitement,
   caractérisée en ce que,
   l'électrode (A) est hélicoïdale et suit la voie de transport (F) du convoyeur oscillant (Sf) à distance, en lui étant parallèle.

2. Installation suivant la revendication 1, caractérisée en ce que,
   le contact électrique du produit (G) peut être réalisé par la voie de transport (F) du convoyeur oscillant (Sf).

3. Installation suivant l'une des revendications précédentes,
   caractérisée en ce que,
   la voie de transport (F) du convoyeur oscillant est munie d'une perforation.

4. Installation suivant la revendication 3, caractérisée en ce que,
   en-dessous de la voie de transport (F) est montée dans le bain de traitement une électrode supplémentaire (ZA) dirigée parallèlement à la voie de transport (F), à distance de celle-ci.

5. Installation suivant l'une des revendications précédentes,
   caractérisée en ce que,
   la voie de transport (F) du convoyeur oscillant (Sf) comporte, considéré dans la direction de transport, au moins un gradin (St) menant vers le bas.

6. Installation suivant l'une des revendications précédentes,
   caractérisée en ce que,
   un courant de bain, agissant sur le produit (G) dans la direction du transport, peut être produit dans la cuve à l'aide d'une pompe de circulation (Up).

7. Installation suivant l'une des revendications précédentes,
   caractérisée en ce que,
   la cuve (W) peut être fermée d'une manière étanche au gaz et en ce que l'espace se trouvant au-dessous du bain de traitement peut être alimenté en gaz inerte (Ig).

8. Utilisation d'une installation suivant l'une des revendications 1 à 7, dans le dépôt par électrolyse d'aluminium à partir d'électrolytes organoluminiques, aprotiques, exempts d'oxygène et anhydres.

# FIG 1

# FIG2

# FIG 3